# FASCICULE DE BREVET EUROPEEN

(11) **EP 2 821 299 B1**
(45) Date de publication et mention de la délivrance du brevet: **14.09.2016**
(21) Numéro de dépôt: 14173477.2
(22) Date de dépôt: 23.06.2014
(51) Int. Cl.: B60S 1/52, B60S 1/38

(54) **Dispositif chauffant pour balai d'essuie glace d'un véhicule et balai d'essuie glace le comportant**
Heizvorrichtung für Scheibenwischerarm eines Fahrzeugs, und diese umfassender Scheibenwischerarm
Heating device for a windscreen-wiper blade and windscreen-wiper blade comprising same

(30) Priorité: 03.07.2013 FR 1356487
(43) Date de publication de la demande: 07.01.2015
(73) Titulaire: Valeo Systèmes d'Essuyage, 78321 Le Mesnil Saint Denis (FR)
(72) Inventeur: Jarasson, Jean-Michel, 78321 LE MESNIL SAINT DENIS (FR); Marquet, Chantal, 43100 BRIOUDE (FR); Caillot, Gérald, 78720 CERNAY LA VILLE (FR); Izabel, Vincent, 91380 CHILLY MAZARIN (FR)
(74) Mandataire: Callu Danseux, Violaine

(56) Documents cités:
- WO-A1-2011/003613
- DE-A1-102010 007 557
- FR-A1- 2 965 235
- US-A1- 2012 005 856

## Description

La présente invention concerne un dispositif chauffant pour balai d'essuie-glace d'un véhicule et un balai d'essuie-glace le comportant.

Le dispositif chauffant dans ce genre de balai d'essuie-glace comprend un élément chauffant intégré dans le corps du balai d'essuie-glace en s'étendant sur sensiblement toute la longueur de celui-ci. Grâce à la présence de cet élément chauffant, il est possible de faire fondre de la glace ou de la neige qui lors de la période froide peut autrement se former ou s'agglutiner sur le balai d'essuie-glace et qui alors nuit à son bon fonctionnement. Cela peut être encore plus gênant lorsque le balai d'essuie-glace est pourvu d'une rampe de distribution d'un liquide de lavage qui dans le cas où il gèle, en particulier au niveau des trous de distribution, empêche le liquide de sortir et peut d'une manière générale rendre l'ensemble du balai d'essuie-glace trop rigide.

Le dispositif chauffant du balai d'essuie-glace peut comprendre un ou plusieurs fils résistifs associés à un des éléments constitutifs du balai d'essuie-glace. Le ou les fils résistifs s'étendent en général tout au long d'un de ces éléments constitutifs.

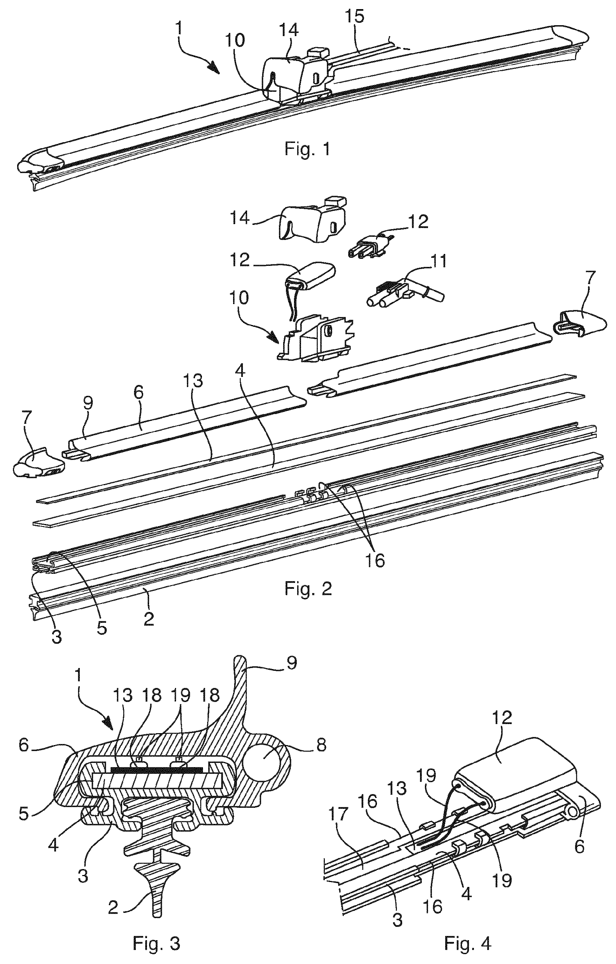

On connaît également un tel dispositif chauffant comprenant un film résistif incorporé dans le balai d'essuie-glace. La structure d'un tel balai d'essuie-glace connu est illustrée à l'aide de l'exemple montré sur les figures 1 à 4. Il s'agit d'un balai d'essuie-glace du type plat, souvent désigné comme un balai d'essuie-glace souple ou balai d'essuie-glace plat. Les figures 2 et 3 montrent dans une vue éclatée respectivement en coupe les éléments constitutifs du balai d'essuie-glace qui comprennent, de bas en haut, une lame de raclage 2, en général en élastomère, fixée à un élément de support allongé 3, en général en un matériau plastique semi-rigide, un élément d'axe principal longitudinal 4 formant une vertèbre disposée dans un logement 5 de l'élément de support 3, et un élément de couverture 6 fixé sur l'élément de support 3 par encliquetage. Ces éléments constitutifs présentent sensiblement la même longueur et lors de l'assemblage du balai d'essuie-glace, un capuchon embout 7 est fixé à chaque extrémité de celui-ci.

Dans l'exemple illustré, l'élément de couverture 6 constitue un accessoire qui comprend sur une partie de sa longueur une rampe de projection 8 d'un liquide de lavage. La rampe 8 est pourvue de trous de projection (non représentés). Cet accessoire comporte en outre un déflecteur aérodynamique 9 destiné à solliciter avec plus de vigueur la lame de raclage 2 contre une vitre de véhicule (non montrée) ou autrement dit, à décroître la portance ou augmenter la déportance du balai d'essuie-glace.

L'élément de couverture 6 peut également comprendre deux rampes de projection, une le long de chaque côté de l'élément de couverture.

L'élément de couverture 6 du balai d'essuie-glace 1 est en deux parties de sensiblement la même longueur et reliées l'une à l'autre par l'intermédiaire d'un connecteur mécanique 10 qui abrite un connecteur hydraulique 11 pour le liquide de lavage, ainsi qu'un connecteur électrique 12 relié à un élément chauffant 13 qui sous forme d'un film résistif est incorporé dans le balai d'essuie-glace. Le connecteur électrique est composé de 2 parties : une partie intégrée au balai et une intégrée au bras d'essuyage.

Le connecteur mécanique 10 est fermé vers l'extérieur par une chape formant organe de liaison 14 le reliant à un bras d'actionnement 15 par une articulation (non représentée). Un dispositif d'essuyage est ainsi formé par le balai d'essuie-glace 1, ce bras d'actionnement 15, et un moteur d'entraînement en oscillation (non représenté) de celui-ci.

L'élément de support 3 comporte dans une zone centrale deux découpes latérales 16 disposées en regard l'une de l'autre. Ces découpes sont destinées à la fixation du connecteur mécanique 10 sur le balai d'essuie-glace lors de son assemblage.

L'élément formant vertèbre 4 est généralement en métal et pourra ci-dessous être désignée sous le terme raccourci de « vertèbre » (« spline » en anglais). Cette vertèbre joue un rôle essentiel dans ce balai d'essuie-glace puisqu'elle assure à l'ensemble du balai d'essuie-glace la rigidité requise pour une bonne tenue mécanique pour bien répartir la force d'appui du balai d'essuie-glace contre une vitre tout en restant suffisamment souple pour s'adapter à la forme de la surface de la vitre qui en général présente une forme bombée.

Lorsqu'on soulève ce balai d'essuie-glace souple, il prend la forme d'un haricot, c'est-à-dire de forme cintrée, de sorte que sa face inférieure soit concave et sa face supérieure par conséquent convexe.

Dans ce balai d'essuie-glace à dispositif chauffant, la vertèbre 4 a en outre pour fonction d'acheminer et de répartir la chaleur en provenance de l'élément chauffant 13 disposé sur sa face supérieure. Par conséquent, dans un balai d'essuie-glace à dispositif chauffant, il est important que la vertèbre soit en un matériau bon conducteur de chaleur de manière à faire activement partie du dispositif chauffant. L'élément chauffant 13 est dans cet exemple sous forme d'un film résistif fixé sur la face supérieure de l'élément formant vertèbre 4 disposée dans le logement 5 de l'élément de support 3. Le logement 5 est ouvert vers le haut sur toute sa longueur par une large fente longitudinale 17 dans laquelle ce film résistif s'étend. Par conséquent, les zones latérales de la face supérieure de la vertèbre ne sont pas couvertes par ce film résistif.

Des points de contact électrique 18 prévus sur le film résistif immédiatement en dessous du connecteur mécanique sont reliés au connecteur électrique 12 par l'intermédiaire de moyens de conduction électrique qui dans l'exemple illustré comporte des fils conducteurs 19 qui passent par la fente 17 du logement 5.

A la place des fils conducteurs 19, il est possible d'utiliser une grille de connexion (en anglais appelée « leadframe ») ou bien des patins flexibles.

Document WO 2011/003613 montre un dispositif chauffant tel que décrit dans le préambule de la première revendication.

Le but de l'invention est de proposer un dispositif chauffant pour un balai d'essuie-glace du même genre dans lequel l'élément chauffant se trouve mieux protégé que dans le balai d'essuie-glace qui vient d'être décrit, alors que son emplacement est optimal pour la distribution de la chaleur vers la face inférieure de l'élément de support et vers la lame de raclage tout en assurant de manière simple la connectivité de l'élément chauffant au connecteur électrique intégré dans le connecteur mécanique pour la liaison avec le bras d'actionnement. Selon l'invention, les éléments dans le connecteur mécanique ne sont pas directement exposés à la chaleur émise par l'élément chauffant, ce qui réduit le risque de les endommager par une chaleur excessive qui pourrait avoir une incidence sur la durée de vie du connecteur électrique si le dispositif chauffant est souvent sollicité.

Un objet de l'invention est un dispositif chauffant apte à être assemblé à un élément de support d'un balai d'essuie-glace, le dispositif chauffant comportant :
- au moins un élément d'axe principal longitudinal apte à être monté à l'intérieur d'un logement de l'élément de support de manière à former vertèbre;
- au moins un élément chauffant disposé sur l'élément formant vertèbre;
caractérisé en ce que l'élément chauffant est disposé sur une face dite inférieure de l'élément formant vertèbre, et en ce que l'élément formant vertèbre comprend au moins une traversée pour le passage de moyens de conduction électrique en vue d'une alimentation électrique de l'élément chauffant.

Selon d'autres caractéristiques de l'invention :
- ladite au moins une traversée est située sensiblement dans la partie centrale de l'élément formant vertèbre, dans le sens longitudinale de celui-ci.
- ladite au moins une traversée est disposée en retrait par rapport aux bords latéraux de l'élément formant vertèbre ;
- ladite au moins une traversée est disposée sur un bord latéral de l'élément formant vertèbre ;
- deux traversées sont prévues dans l'élément formant vertèbre, en étant espacées l'une de l'autre dans le sens transversal et / ou longitudinal de l'élément formant vertèbre ;
- deux traversées sont disposées sur les bords latéraux opposés de l'élément formant vertèbre ;
- l'élément chauffant est un film résistif ;
- l'élément chauffant est un revêtement résistif ;
- l'élément chauffant s'étend sur toute la largeur de l'élément formant vertèbre ; et
- l'élément chauffant (s'étend sur sensiblement toute la longueur de l'élément formant vertèbre.

Un autre objet de l'invention est un balai d'essuie-glace, comprenant
- un dispositif chauffant présentant les caractéristiques définies ci-dessus ;
- un élément de support d'axe principal longitudinal qui comporte :
   o un logement longitudinal ;
   o des moyens de maintien d'une lame racleuse ;
- une lame racleuse ; et
- un connecteur mécanique apte à relier le balai d'essuie-glace à un bras d'actionnement d'un dispositif d'essuyage, ce connecteur mécanique étant monté sur l'élément de support.

Selon une autre caractéristique de ce balai d'essuie-glace, le connecteur mécanique comprend un connecteur électrique auquel sont reliés lesdits moyens de conduction électrique du dispositif chauffant.

Selon encore une autre caractéristique de ce balai d'essuie-glace, le connecteur mécanique comprend un connecteur hydraulique pour un liquide de lavage.

Selon encore une autre caractéristique de ce balai d'essuie-glace, ladite au moins une traversée du dispositif chauffant est disposée immédiatement en dessous dudit connecteur mécanique. De manière alternative, ladite au moins une traversée du dispositif chauffant est disposé à proximité dudit connecteur mécanique, en dehors de la zone située en dessous dudit connecteur mécanique.

D'autres caractéristiques et avantages de l'invention ressortiront de la description qui va suivre d'un mode de réalisation non limitatif de l'invention, en référence aux figures annexées dans lesquelles :
- la figure 1, déjà décrite, est une vue d'ensemble en perspective d'un balai d'essuie-glace relié à un bras d'actionnement ;
- la figure 2, déjà décrite, est une vue éclatée d'un balai d'essuie-glace appartenant à l'état de la technique ;
- la figure 3, déjà décrite, est une vue en coupe du balai d'essuie-glace de la figure 2, après assemblage, l'élément chauffant étant placé sur la face supérieure de la vertèbre ;
- la figure 4, déjà décrite, est une vue partielle schématique montrant la liaison de l'élément chauffant à un connecteur électrique par des fils conducteurs ;
- la figure 5 est une vue en coupe selon la ligne 5A-5A de la figure 6 illustrant un balai d'essuie-glace comportant le dispositif chauffant selon l'invention dans lequel l'élément chauffant est disposé sous la vertèbre;
- la figure 6 est une vue similaire à celle de la figure 4 et qui montre un mode de réalisation pour faire passer les fils conducteurs pour relier l'élément chauffant au connecteur électrique ;
- la figure 7A est une vue en coupe partielle du balai d'essuie-glace de la figure 5 selon la ligne 7A-7A de la figure 7B ;
- la figure 7B est une vue partielle de dessus de la vertèbre montrant une première variante d'emplacement de traversées effectuées dans la vertèbre pour le passage des fils conducteurs ;
- la figure 8A est une vue en coupe partielle du balai d'essuie-glace de la figure 5 selon la ligne 8A-8A de la figure 8B ;
- la figure 8B est une vue partielle de dessus de la vertèbre montrant une deuxième variante d'emplacement de traversées effectuées dans la vertèbre pour le passage des fils conducteurs ;
- la figure 9A est une vue en coupe partielle du balai d'essuie-glace de la figure 5 selon la ligne 9A-9A de la figure 9B ; et
- la figure 9B est une vue partielle de dessus de la vertèbre montrant une troisième variante d'emplacement de traversées effectuées dans la vertèbre pour le passage des fils conducteurs.

Dans les figures, les éléments identiques ou équivalents à ceux déjà décrits en référence aux figures 1 à 4 porteront les mêmes signes de référence.

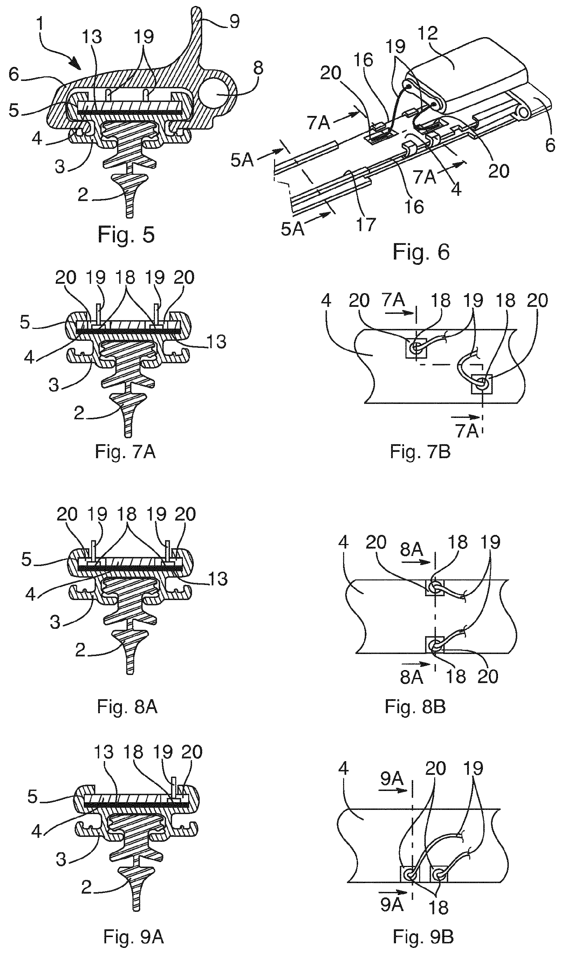

La figure 5 montre un balai d'essuie-glace 1 comportant un dispositif chauffant selon l'invention dans une vue en coupe selon la ligne 5A-5A de la figure 6. Les éléments constitutifs du balai d'essuie-glace sont les mêmes que ceux du balai d'essuie-glace déjà décrit en référence aux figures 1 à 4 et ces éléments ne seront pas décrits de nouveau en détail.

La différence essentielle par rapport au dispositif chauffant du balai d'essuie-glace déjà décrit réside dans le fait que l'élément chauffant 13 est disposé en dessous de l'élément formant vertèbre 4, et non pas au-dessus de celui-ci. Cela donne les avantages d'une répartition et d'une distribution améliorées vers le bas de la chaleur émise par l'élément chauffant tout en mettant le connecteur électrique 12 à l'abri d'un rayonnement de chaleur direct qui pourrait provoquer une surchauffe du connecteur lors d'une utilisation prolongée.

L'élément chauffant 13 est avantageusement formé par un film résistif qui se trouve bien protégé dans le logement 5 prévu dans l'élément de support 3. Bien entendu, cela n'exclut pas l'utilisation de fils résistifs avec la même disposition à la place du film résistif ou bien même d'éléments résistifs tels que des pierres à coefficient de température positif.

Comme élément chauffant, il est également possible d'utiliser un revêtement résistif sous forme d'une peinture résistive ou autre revêtement déposé sur l'élément formant vertèbre 4.

Or, avec cet emplacement avantageux de l'élément chauffant 13, il y a un problème de connectivité au niveau de la liaison électrique entre l'élément chauffant 13 qui se trouve en dessous de la vertèbre 4 et le connecteur électrique 12 qui se trouve au-dessus de celle-ci.

Selon l'invention, ce problème de connectivité est résolu par l'agencement d'au moins une traversée 20 dans la vertèbre 4 pour le passage des deux fils conducteurs 19, ou d'autres moyens de conduction électrique, reliant l'élément chauffant 13 au connecteur électrique 12.

Etant donné que la largeur de la vertèbre 4 est relativement limitée, de l'ordre de 10 mm, et même s'il est possible d'effectuer une seule traversée dans la vertèbre 4 pour le passage des deux fils conducteurs 19, il est préférable d'y prévoir deux traversées 20 espacées l'une de l'autre dans le sens transversal et / ou longitudinal de l'élément formant vertèbre 4.

De cette manière, il n'y pas de risque que les fils conducteurs provoquent un court-circuit à cause de leur proximité quand ils passent par la même traversée dans un espace relativement restreint.

Pour limiter la longueur des fils conducteurs, les traversées 20 se trouvent immédiatement en dessous du connecteur mécanique 10.

La figure 6 illustre un mode de réalisation avec deux traversées 20 disposées espacées l'une de l'autre dans le sens transversal et longitudinal et en retrait par rapport aux bords latéraux de l'élément formant vertèbre 4.

Selon une variante non représentée, les deux traversées 20 sont alignées l'une sur l'autre le long d'un axe central longitudinal de l'élément formant vertèbre 4.

Les figures 7A et 7B montrent dans une vue en coupe respectivement de dessus le même mode de réalisation des traversées 20.

Les figures 8A et 8B montrent dans une vue en coupe respectivement de dessus une première variante du mode de réalisation de la figure 6 dans laquelle chacune des deux traversées est disposée sur un bord latéral de l'élément formant vertèbre, et plus précisément sur les bords latéraux opposés de celui-ci.

Les figures 9A et 9B montrent dans une vue en coupe respectivement de dessus une deuxième variante du mode de réalisation de la figure 6 dans laquelle les deux traversées sont disposées sur un bord latéral de l'élément formant vertèbre, et plus précisément sur un seul et même des bords latéraux opposés de celui-ci.

Le film résistif qui dans l'exemple montré sur les figures 5 à 9B forme l'élément résistif 13 est avantageusement fixé directement sur une face inférieure de l'élément formant vertèbre, par exemple par une face autoadhésive prévue sur le film.

Le film résistif 13 s'étend de préférence sur toute la largeur de l'élément formant vertèbre 4 et sur sensiblement toute la longueur de celui-ci.

Le balai d'essuie-glace comportant le dispositif chauffant selon l'invention fait avantageusement partie d'un dispositif d'essuyage utilisé sur un véhicule.

Bien entendu, l'invention n'est pas limitée aux exemples illustrés et décrits, et l'homme du métier sera en mesure de trouver des variantes sans pour autant sortir du cadre de l'invention, en particulier des variantes dans lesquelles des fils résistifs ou un revêtement résistif sont utilisés à la place du film résistif.

Il doit en particulier être noté que le balai d'essuie-glace à dispositif chauffant selon l'invention peut aussi être dépourvu de dispositif de distribution d'un liquide de lavage ou contrairement à cela être pourvu d'un double dispositif de distribution, un sur chaque côté latéral du balai. La présence d'un déflecteur aérodynamique n'est pas non plus indispensable pour la mise en oeuvre de l'invention.

## Revendications

1. Dispositif chauffant apte à être assemblé à un élément de support (3) d'un balai d'essuie-glace (1), le dispositif chauffant comportant :
• au moins un élément d'axe principal longitudinal (4) apte à être monté à l'intérieur d'un logement (5) de l'élément de support (3) de manière à former vertèbre;
• au moins un élément chauffant (13) disposé sur l'élément formant vertèbre (4);
**caractérisé en ce que**, l'élément formant vertèbre comprend au moins une traversée (20) pour le passage de moyens de conduction électrique (19) en vue d'une alimentation électrique de l'élément chauffant (13).

2. Dispositif chauffant selon la revendication 1, **caractérisé en ce que** l'élément chauffant (13) est disposé sur une face dite inférieure de l'élément formant vertèbre (4).

3. Dispositif chauffant selon la revendication 1 ou 2, **caractérisé en ce que** ladite au moins une traversée (20) est située sensiblement dans la partie centrale de l'élément formant vertèbre (4), dans le sens longitudinale de celui-ci.

4. Dispositif chauffant selon l'une des revendications 1 à 3, **caractérisé en ce que** ladite au moins une traversée (20) est disposée en retrait par rapport aux bords latéraux de l'élément formant vertèbre (4).

5. Dispositif chauffant selon l'une des revendications 1 à 3, **caractérisé en ce que** ladite au moins une traversée (20) est disposée sur un bord latéral de l'élément formant vertèbre (4).

6. Dispositif chauffant selon l'une des revendications 1 à 3, **caractérisé en ce que** deux traversées (20) sont prévues dans l'élément formant vertèbre (4), en étant espacées l'une de l'autre dans le sens transversal et / ou longitudinal de l'élément formant vertèbre (4).

7. Dispositif chauffant selon la revendication 6, **caractérisé en ce que** deux traversées (20) sont disposées sur les bords latéraux opposés de l'élément formant vertèbre (4).

8. Dispositif chauffant selon l'une quelconque des revendications précédentes, **caractérisé en ce que** l'élément chauffant (13) est un film résistif.

9. Dispositif chauffant selon l'une quelconque des revendications 1 à 7, **caractérisé en ce que** l'élément chauffant (13) est un revêtement résistif.

10. Dispositif chauffant selon l'une des revendications 8 ou 9, **caractérisé en ce que** l'élément chauffant (13) s'étend sur toute la largeur de l'élément formant vertèbre (4).

11. Dispositif chauffant selon l'une des revendications 8 à 10, **caractérisé en ce que** l'élément chauffant (13) s'étend sur sensiblement toute la longueur de l'élément formant vertèbre (4).

12. Balai d'essuie-glace, **caractérisé en ce qu'**il comprend :
• un dispositif chauffant selon l'une quelconque des revendications 1 à 11;
• un élément de support (3) d'axe principal longitudinal qui comporte :
∘ un logement longitudinal ;
∘ des moyens de maintien d'une lame racleuse ;
• une lame racleuse ; et
• un connecteur mécanique (10) apte à relier le balai d'essuie-glace à un bras d'actionnement (15) d'un dispositif d'essuyage, ce connecteur mécanique étant monté sur l'élément de support (3).

13. Balai d'essuie-glace selon la revendication précédente, **caractérisé en ce que** le connecteur mécanique (10) comprend un connecteur électrique (12) auquel sont reliés lesdits moyens de conduction électrique (19) du dispositif chauffant.

14. Balai d'essuie-glace selon l'une des revendications 12 ou 13, **caractérisé en ce que** le connecteur mécanique (10) comprend un connecteur hydraulique (11) pour un liquide de lavage.

15. Balai d'essuie-glace selon l'une quelconque des revendications 12 à 14, **caractérisé en ce que** ladite au moins une traversée (20) du dispositif chauffant est disposée immédiatement en dessous dudit connecteur mécanique (10).

16. Balai d'essuie-glace selon l'une quelconque des revendications 12 à 14, **caractérisé en ce que** ladite au moins une traversée (20) du dispositif chauffant est disposé à proximité dudit connecteur mécanique (10), en dehors d'une zone située en dessous dudit connecteur mécanique (10).

## Patentansprüche

1. Heizvorrichtung, die in der Lage ist, an einem Trägerelement (3) eines Scheibenwischerarms (1) angebracht zu werden, wobei die Heizvorrichtung umfasst:
• mindestens ein Hauptlängsachsenelement (4), das in der Lage ist, im Inneren einer Aufnahme (5) des Trägerelements (3) montiert zu werden, sodass ein Rückgrat gebildet wird;
• mindestens ein Heizelement (13), das an dem ein Rückgrat bildenden Element (4) angeordnet ist;
**dadurch gekennzeichnet, dass** das ein Rückgrat bildende Element mindestens einen Durchgang (20) zum Durchführen von elektrischen Leitmitteln (19) im Hinblick auf eine Stromversorgung des Heizelements (13) umfasst.

2. Heizvorrichtung nach Anspruch 1, **dadurch gekennzeichnet, dass** das Heizelement (13) an einer Unterseite Seite des ein Rückgrat bildenden Elements (4) angeordnet ist.

3. Heizvorrichtung nach Anspruch 1 oder 2, **dadurch gekennzeichnet, dass** sich der mindestens eine Durchgang (20) weitestgehend im mittleren Teil des ein Rückgrat bildenden Elements (4), in dessen Längsrichtung, befindet.

4. Heizvorrichtung nach einem der Ansprüche 1 bis 3, **dadurch gekennzeichnet, dass** der mindestens eine Durchgang (20) bezogen auf die Seitenkanten des ein Rückgrat bildenden Elements (4) zurückgesetzt angeordnet ist.

5. Heizvorrichtung nach einem der Ansprüche 1 bis 3, **dadurch gekennzeichnet, dass** der mindestens eine Durchgang (20) an einer Seitenkante des ein Rückgrat bildenden Elements (4) angeordnet ist.

6. Heizvorrichtung nach einem der Ansprüche 1 bis 3, **dadurch gekennzeichnet, dass** zwei Durchgänge (20) im ein Rückgrat bildenden Element (4) vorgesehen sind, wobei sie in Querrichtung und/oder Längsrichtung des ein Rückgrat bildenden Elements (4) mit einem Abstand zueinander angeordnet sind.

7. Heizvorrichtung nach Anspruch 6, **dadurch gekennzeichnet, dass** zwei Durchgänge (20) an den gegenüberliegenden Seitenkanten des ein Rückgrat bildenden Elements (4) angeordnet sind.

8. Heizvorrichtung nach einem der vorangehenden Ansprüche, **dadurch gekennzeichnet, dass** das Heizelement (13) eine Widerstandsfolie ist.

9. Heizvorrichtung nach einem der Ansprüche 1 bis 7, **dadurch gekennzeichnet, dass** das Heizelement (13) eine Widerstandsbeschichtung ist.

10. Heizvorrichtung nach einem der Ansprüche 8 oder 9, **dadurch gekennzeichnet, dass** sich das Heizelement (13) über die gesamte Breite des ein Rückgrat bildenden Elements (4) erstreckt.

11. Heizvorrichtung nach einem der Ansprüche 8 bis 10, **dadurch gekennzeichnet, dass** sich das Heizelement (13) weitestgehend über die gesamte Länge des ein Rückgrat bildenden Elements (4) erstreckt.

12. Scheibenwischerarm, **dadurch gekennzeichnet, dass** er umfasst:
• eine Heizvorrichtung nach einem der Ansprüche 1 bis 11;
• ein Trägerelement (3) der Hauptlängsachse, das aufweist
o eine Längsaufnahme;
o Mittel zum Halten eines Wischerblatts;
• ein Wischerblatt; und
• einen mechanischen Verbinder (10), der in der Lage ist, den Scheibenwischerarm mit einem Betätigungselement (15) einer Wischvorrichtung zu verbinden, wobei dieser mechanische Verbinder am Trägerelement (3) montiert ist.

13. Scheibenwischerarm nach dem vorangehenden Anspruch, **dadurch gekennzeichnet, dass** der mechanische Verbinder (10) einen elektrischen Verbinder (12) umfasst, an den die elektrischen Leitmittel (19) der Heizvorrichtung angebunden sind.

14. Scheibenwischerarm nach einem der Ansprüche 12 oder 13, **dadurch gekennzeichnet, dass** der mechanische Verbinder (10) einen hydraulischen Verbinder (11) für eine Waschflüssigkeit umfasst.

15. Scheibenwischerarm nach einem der Ansprüche 12 bis 14, **dadurch gekennzeichnet, dass** der mindestens eine Durchgang (20) der Heizvorrichtung unmittelbar unter dem mechanischen Verbinder (10) angeordnet ist.

16. Scheibenwischerarm nach einem der Ansprüche 12 bis 14, **dadurch gekennzeichnet, dass** der mindestens eine Durchgang (20) der Heizvorrichtung in der Nähe des mechanischen Verbinders (10), außerhalb eines Bereichs unter dem mechanischen Verbinder (10), angeordnet ist.

## Claims

1. Heating device suitable for assembly with an element (3) supporting a wiper blade (1), the heating device comprising:
• at least one element of longitudinal main axis (4) suitable for mounting inside a housing (5) of the support element (3) so as to form a spine;
• at least one heating element (13) positioned on the spine-forming element (4);
**characterized in that** the spine-forming element comprises at least one bushing (20) for the passage of electrical conduction means (19) in order to provide an electrical power supply for the heating element (13).

2. Heating device according to Claim 1, **characterized in that** the heating element (13) is positioned on a so-called bottom face of the spine-forming element (4).

3. Heating device according to Claim 1 or 2, **characterized in that** said at least one bushing (20) is situated substantially in the central part of the spine-forming element (4), in the longitudinal direction thereof.

4. Heating device according to one of Claims 1 to 3, **characterized in that** said at least one bushing (20) is positioned set back relative to the side edges of the spine-forming element (4).

5. Heating device according to one of Claims 1 to 3, **characterized in that** said at least one bushing (20) is positioned on a side edge of the spine-forming element (4).

6. Heating device according to one of Claims 1 to 3, **characterized in that** two bushings (20) are provided in the spine-forming element (4), by being spaced apart from one another in the transverse and/or longitudinal direction of the spine-forming element (4).

7. Heating device according to Claim 6, **characterized in that** two bushings (20) are positioned on opposing side edges of the spine-forming element (4).

8. Heating device according to any one of the preceding claims, **characterized in that** the heating element (13) is a resistive film.

9. Heating device according to any one of Claims 1 to 7, **characterized in that** the heating element (13) is a resistive coating.

10. Heating device according to one of Claims 8 or 9, **characterized in that** the heating element (13) extends over the entire width of the spine-forming element (4).

11. Heating device according to one of Claims 8 to 10, **characterized in that** the heating element (13) extends over substantially the entire length of the spine-forming element (4).

12. Wiper blade, **characterized in that** it comprises:
• a heating device according to any one of Claims 1 to 11;
• a support element (3) of longitudinal main axis which comprises:
∘ a longitudinal housing;
∘ means for holding a scraper blade;
• a scraper blade; and
• a mechanical connector (10) suitable for linking the wiper blade to an actuating arm (15) of a wiping device, this mechanical connector being mounted on the support element (3).

13. Wiper blade according to the preceding claim, **characterized in that** the mechanical connector (10) comprises an electrical connector (12) to which said electrical conduction means (19) of the heating device are linked.

14. Wiper blade according to one of Claims 12 or 13, **characterized in that** the mechanical connector (10) comprises a hydraulic connector (11) for a washing liquid.

15. Wiper blade according to any one of Claims 12 to 14, **characterized in that** said at least one bushing (20) of the heating device is positioned immediately under said mechanical connector (10).

16. Wiper blade according to any one of Claims 12 to 14, **characterized in that** said at least one bushing (20) of the heating device is positioned in proximity to said mechanical connector (10), outside of an area situated under said mechanical connector (10).
